Europäisches Patentamt

European Patent Office

Office européen des brevets

(11) Numéro de publication: **0 487 366 B1**

# FASCICULE DE BREVET EUROPEEN

(45) Date de publication de fascicule du brevet: **18.01.95**

(51) Int. Cl.⁶: **C09D 5/24**, C09C 1/00, H01B 1/08

(21) Numéro de dépôt: **91402857.6**

(22) Date de dépôt: **25.10.91**

Le dossier contient des informations techniques présentées postérieurement au dépôt de la demande et ne figurant pas dans le présent fascicule.

(54) **Peintures antistatiques et radiotransparentes blanches pour satellites.**

(30) Priorité: **29.10.90 FR 9013362**

(43) Date de publication de la demande:
**27.05.92 Bulletin 92/22**

(45) Mention de la délivrance du brevet:
**18.01.95 Bulletin 95/03**

(84) Etats contractants désignés:
**AT BE CH DE DK ES FR GB GR IT LI LU NL SE**

(56) Documents cités:
**EP-A- 0 173 609**
**DE-A- 1 417 246**

**PATENT ABSTRACTS OF JAPAN, vol. 14, no. 377 (C-748)[4320], 15 août 1990; & JP-A-02 137 726**

(73) Titulaire: **CENTRE NATIONAL D'ETUDES SPA-TIALES**
**2, Place Maurice Ouentin**
**F-75001 Paris (FR)**

(72) Inventeur: **Guillaumon, Jean-Claude**
**Chemin de Pauze**
**Ayguesvives,**
**F-31450 Montgiscard (FR)**
Inventeur: **Nabarra, Pascale Véronique**
**9 rue Jany**
**F-31000 Toulouse (FR)**
Inventeur: **Blet, Louis**
**Route de Montbrun**
**Corronsac,**
**F-31450 Montgiscard (FR)**

(74) Mandataire: **Colas, Jean-Pierre et al**
**Cabinet de Boisse**
**37, avenue Franklin D. Roosevelt**
**F-75008 Paris (FR)**

## Description

L'invention concerne des peintures blanches à base d'un pigment semi-conducteur oxyde d'étain/dioxyde de titane dopé à l'oxyde d'antimoine utiles pour former un revêtement blanc antistatique et radiotransparent sur des antennes de satellites, assurant en même temps le contrôle thermique de ces antennes.

On a besoin, pour le contrôle thermique d'antennes de satellites géostationnaires de revêtements possédant les propriétés suivantes :

- $\alpha s$ (facteur d'absorption solaire) $\leq$ 0,30.
- $\Sigma$ (facteur hémisphérique d'émission infra-rouge) $\geq$ 0,80.
- Radiotransparence dans une large bande de fréquences allant de quelques KHz à 20 GHz.
- Résistance électrique superficielle comprise entre 1 et 1000 M$\Omega$/carré telle que mesurée sous un vide inférieur à 1,33 x $10^{-3}$Pa ($10^{-5}$ Torr) de façon à évacuer les charges électriques (électrons et protons).
- Faible dégazage sous vide.
- Bonne stabilité aux rayonnements UV et corpusculaires.

Actuellement, il n'existe pas de revêtements possédant l'ensemble de ces propriétés.

La technologie actuellement utilisée consiste à déposer du germanium sur les antennes de satellites ce qui permet d'évacuer les charges électriques tout en assurant la radiotransparence, mais le facteur d'absorption solaire est trop élevé pour réaliser un contrôle thermique correct des antennes.

L'invention a pour objet de fournir une peinture blanche antistatique et radiotransparente pour antennes de satellites qui assure en même temps le contrôle thermique de ces antennes et qui est peu coûteux.

Plus précisément, l'invention concerne une peinture blanche comprenant un pigment blanc semi-conducteur, un liant filmogène, un solvant de ce liant, et, facultativement, un pigment blanc non semi-conducteur, caractérisée en ce que le pigment blanc semi-conducteur présente une résistance électrique volumique d'au plus 2,5 k$\Omega$/cm$^3$ et est le produit obtenu (a) par calcination à une température de 700 à 1000°C d'un mélange intime de 30 à 73 parties en poids d'oxyde d'étain $SnO_2$, de 70 à 27 parties de dioxyde de titane, et de 0,10 à 10 parties en poids d'oxyde d'antimoine $Sb_2 O_3$, le total de l'oxyde d'étain et du dioxyde de titane étant de 100 parties, puis (b) broyage du produit résultant de l'étape (a) en particules de grosseur pigmentaire.

De préférence, la proportion de $Sb_2 O_3$ est de 0,25 à 5 parties en poids par 100 parties en poids de $SnO_2 + TiO_2$ .

Le dioxyde de titane peut être sous la forme de rutile, d'anatase ou de mélanges de ceux-ci. On préfère utiliser le dioxyde de titane sous forme d'anatase ou d'un mélange d'anatase et de rutile, car l'anatase tend à donner des peintures de blancheur supérieure.

Lorsque la proportion de $SnO_2$ croît, dans la gamme indiquée, cela a tendance à améliorer la conductivité électrique du feuil de peinture appliqué à partir de la composition de peinture, tandis que, lorsque la proportion de $TiO_2$ croît, dans la gamme indiquée, cela a tendance à améliorer la blancheur de la peinture et donc d'abaisser le facteur d'absorption solaire.

Le mélange de $SnO_2$, $TiO_2$ et $Sb_2 O_3$ doit être calciné à une température de 700 à 1000°C. Au-dessous de 700°C, la résistance électrique volumique du pigment obtenue est trop élevée et au-dessus de 1000°C, le mélange d'oxydes commence à se décomposer.

La durée de la calcination peut varier largement et peut aller de quelques minutes à quelques heures suivant l'inertie thermique du creuset employé et du mélange d'oxydes.

Après calcination du mélange d'oxydes, la masse obtenue est laissée refroidir et broyée en particules de grosseur pigmentaire, c'est-à-dire en particules d'une grosseur supérieure à environ 1 $\mu$m, typiquement dans la gamme de 5 à 150 $\mu$m pour obtenir un pouvoir couvrant satisfaisant.

EP-A-0 173 609 déposé le 24 Juillet 1985 revendique des pigments blancs électroconducteurs obtenus par calcination à 900-950°C d'un mélange de 1,25-10 parties en poids de $Sb_2O_3$ et de 100 parties en poids de $SnO_2$, et une peinture anti-statique comprenant un tel pigment. A titre comparatif sont également décrits deux pigments obtenus pas calcination à 950°C de mélange de $TiO_2$, $Sb_2O_3$ et $SnO_2$ en des rapports en poids de 53,2/13,3/100 et 75/5/100, respectivement. Aucune peinture incluant l'un ou l'autre de ces pigments comparatifs n'est toutefois décrite. EP-A-0 173 609 n'envisage pas de fournir une peinture utile pour former un revêtement blanc antistatique et radiotransparent sur des antennes de satellites, qui assure en même temps le contrôle thermique de ces antennes.

Comme liant, on peut utiliser n'importe quel liant connu comme étant utile pour la formation de peintures. On peut citer, à titre d'exemples non limitatifs, des polyuréthanes, des résines époxydes, des résines acryliques, des résines glycérophtaliques, des résines silicones, des silicates. L'homme de l'art pourra trouver dans l'abondante littérature publiée à ce sujet, de nombreux types de liants utilisables. A ce jour, on préfère utiliser des silicones ou des silicates pour les applications spatiales.

Outre le pigment semi-conducteur et le liant, la peinture de l'invention peut comprendre un pigment blanc non conducteur de l'électricité, par exemple du dioxyde de titane, de l'oxyde de zinc, de l'orthotitanate de zinc, de l'orthostannate de zinc, de l'orthotitanate d'étain, destiné à améliorer le facteur d'absorption solaire de la peinture.

Lorsqu'on incorpore à la peinture de l'invention un pigment blanc non conducteur de l'électricité, il faut veiller à ce que le rapport en poids pigment non conducteur de l'électricité/pigment semi-conducteur n'excède pas 1,5 environ, de préférence 1, pour ne pas dégrader les propriétés de résistance électrique.

D'autre part, le rapport en poids pigments totaux/liant sera habituellement dans la gamme de 1,5 à 10, bien que ces valeurs ne soient pas étroitement critiques.

Comme solvant, on peut utiliser, à titre indicatif :
- des hydrocarbures aromatiques (toluène, xylène, styrène, naphta),
- des hydrocarbures aliphatiques (white spirit, essences, pétrole),
- des cétones (méthyléthylcétone, méthylisobutylcétone, diacétone alcool),
- des esters (acétate d'éthyle, acétate de méthyle, acétate de propyle, acétate d'étylèneglycol, acétate de méthylèneglycol),
- des éthers de glycol (éthylglycol, butylglycol, méthylèneglycol, propylèneglycol),
- des alcools (éthanol, propanol, méthanol),
- des hydrocarbures terpéniques (essence de térébenthine), et
- de l'eau.

La proportion de solvant peut aller jusqu'à 60% en poids, par rapport au poids total de la peinture.

Bien entendu, les peintures de l'invention peuvent comprendre également tous adjuvants désirés communément employés dans les formulations de peintures, à condition bien sûr, qu'ils ne dégradent pas excessivement les propriétés de conductivité électrique du feuil de peinture.

Les peintures de l'invention peuvent s'appliquer en une ou plusieurs couches sur le substrat à peindre en donnant des feuils de peinture d'une épaisseur avantageusement comprise entre 5 et 250 micromètres et d'une résistance électrique superficielle comprise entre 1 et 1000 MΩ/carré. Toutes les résistances électriques superficielles afférentes aux peintures de l'invention sont données pour l'épaisseur du feuil de peinture appliqué (habituellement 30 à 60 $\mu$m), puisque c'est la résistance électrique superficielle de ce feuil qui est importante en pratique.

L'application de la couche de peinture de l'invention sur un substrat peut s'effectuer au pistolet à peinture, à la brosse ou par toute autre technique connue.

La peinture de l'invention peut être appliquée sur toutes sortes de substrats tels que des polyimides, des composites de polyimides ou d'époxydes renforcés de fibres de verre, de fibres d'aramide (Kevlar[R]), de fibres de carbone, ou des métaux.

Si désiré ou nécessaire, on peut appliquer une couche de primaire d'accrochage, ou toute autre couche primaire, par exemple anti-corrosion, avant d'appliquer la peinture de l'invention.

L'invention concerne également les substrats, tels que les antennes de satellites spatiaux, portant un revêtement appliqué à partir d'une composition de peinture selon l'invention, ce revêtement présentant les propriétés suivantes :
- un facteur d'absorption solaire d'au plus 0,30
- un facteur hémisphérique d'émission infrarouge au moins égal à 0,80,
- une résistance électrique superficielle de 1 à 1000 MΩ/carré, telle que mesurée sous un vide inférieur à 1,33 x 10$^{-3}$ Pa (10$^{-5}$ Torr),
- une radiotransparence dans une bande de fréquences allant de quelques kHZ à 20 GHz, telle que l'atténuation du signal due au revêtement n'excède pas 0,2 dB,
- un faible dégazage sous vide, et
- une bonne stabilité aux rayonnements ultra-violet et corpusculaires.

Les exemples non limitatifs suivants sont donnés en vue d'illustrer l'invention.

EXEMPLE 1

Cet exemple illustre la préparation de divers pigments oxyde d'étain/oxyde de titane dopés à l'oxyde d'antimoine en utilisant différents oxydes de titane et diverses proportions d'oxyde d'étain, d'oxyde de titane et d'oxyde d'antimoine et des conditions de température et de durée variées.

Le tableau ci-après récapitule les compositions essayées, les conditions opératoires utilisées et les propriétés des pigments résultants.

3

Les pigments ont été préparés en mélangeant intimement de l'oxyde d'étain, de l'oxyde de titane et de l'oxyde d'antimoine ayant une grosseur de particules comprises entre 20 et 150 µm, dans des proportions désirées, pendant environ 10 minutes dans un mélangeur à poudre, puis en chauffant le mélange résultant dans un four jusqu'à la température de calcination indiquée d'une manière continue.

| Pigment | g de SnO$_2$ | TiO$_2$ forme, g | | g de Sb$_2$O$_3$ | Température de calcination °C | Durée | R volumique |
|---|---|---|---|---|---|---|---|
| 1 | 72,7 | Rutile | 27,3 | 5,45 | 950 | 10h | 2kΩ |
| 2 | 72,7 | Rutile | 27,3 | 1,82 | 950 | 8h | 400Ω |
| 3 | 72,7 | Rutile | 27,3 | 3,64 | 950 | 8h | 500Ω |
| 4 | 72,7 | Rutile | 27,3 | 5,45 | 950 | 8h | 550Ω |
| 5 | 72,7 | Rutile | 27,3 | 7,27 | 950 | 8h | 800Ω |
| 6 | 72,7 | Rutile | 27,3 | 0,45 | 950 | 8h | 700Ω |
| 7 | 72,7 | Rutile | 27,3 | 0,91 | 950 | 8h | 200Ω |
| 8 | 72,7 | Rutile | 27,3 | 1,36 | 950 | 8h | 400Ω |
| 9 | 72,7 | Rutile | 27,3 | 0,91 | 1000 | 8h | 900Ω |
| 10 | 66,7 | Rutile | 33,3 | 0,83 | 950 | 8h | 180Ω |
| 11 | 61,5 | Rutile | 38,5 | 0,77 | 950 | 8h | 400Ω |
| 12 | 72,7 | (R + A) | 27,3 | 5,45* | 950 | 8h | 70Ω |
| 13 | 72,7 | (R + A) | 27,3 | 0,91 | 950 | 8h | 20Ω |
| 14 | 65,3 | Rutile | 34,7 | 0,43 | 950 | 8h | 800Ω |
| 15 | 65,3 | Rutile | 34,7 | 0,43 | 950 | 8h | 700Ω |
| 16 | 57,1 | (R + A) | 42,9 | 0,71 | 950 | 8h | 400Ω |
| 17 | 50 | (R + A) | 50 | 0,62 | 950 | 8h | 500Ω |
| 18 | 66,7 | (R + A) | 33,3 | 1,11 | 950 | 8h | 100Ω |
| 19 | 57,1 | (R + A) | 42,9 | 1,43 | 950 | 8h | 1kΩ |
| 20 | 50 | (R + A) | 50 | 1,67 | 950 | 8h | 1kΩ |
| 21 | 40 | (R + A) | 60 | 2,00 | 950 | 8h | 2kΩ |
| 22 | 72,7 | (R + A) | 27,3 | 0,91 | 850 | 8h | 80Ω |
| 23 | 72,7 | (R + A) | 27,3 | 0,91 | 800 | 8h | 60Ω |
| 24 | 72,7 | (R + A) | 27,3 | 1,82 | 800 | 8h | 120Ω |
| 25 | 72,7 | (R + A) | 27,3 | 0,91 | 750 | 8h | 80Ω |
| 26 | 72,7 | (R + A) | 27,3 | 0,91 | 700 | 8h | 200Ω |
| 27 | 72,7 | Rutile | 27,3 | 0,91 | 700 | 8h | 400Ω |
| 28 | 72,7 | Rutile | 27,3 | 0,91 | 800 | 8h | 200Ω |
| 29 | 57,1 | (R + A) | 42,9 | 1,43 | 800 | 8h | 250Ω |
| 30 | 72,7 | Anatase | 27,3 | 0,91 | 800 | 8h | 35Ω |
| 31 | 54,5 | Anatase | 45,5 | 0,91 | 800 | 8h | 80Ω |
| 32 | 36,4 | Anatase | 63,6 | 0,91 | 800 | 8h | 400Ω |
| 33 | 30,8 | Anatase | 69,2 | 0,77 | 800 | 5h | 1kΩ |
| 34 | 30,8 | Anatase | 69,2 | 0,77 | 800 | 8h | 1,5kΩ |

\* : Sb$_2$O$_3$ de qualité pour analyse. Pour les autres essais Sb$_2$O$_3$ de qualité dopage

R : Rutile

A : Anatase

EXEMPLE 2

Cet exemple et les suivants illustrent la préparation de peinture selon l'invention.

On obtient un revêtement blanc antistatique radiotransparent dont l'épaisseur après séchage est comprise entre 25 et 40 $\mu$m, en appliquant sur un substrat non conducteur de l'électricité une peinture préparée par le mode opératoire suivant :

A 20 g de liant silicone RTV 121® de Rhône Poulenc, on ajoute 63 g de toluène, on agite manuellement, on ajoute ensuite 76 g de pigment 1 de l'exemple 1 et 38 g d'orthotitanate de zinc ($Zn_2TiO_4$) à la solution obtenue en agitant. Après cela, on broie le mélange dans un flacon de 250 ml avec 100 g de billes de verre dans un broyeur à billes RED DEVIL pendant 30 minutes.

On sépare la composition obtenue des billes par tamisage.

On incorpore 0,4 g de catalyseur 10028 (Rhône-Poulenc) et 18 g d'un diluant composé de 47 g de diacétate d'éthylèneglycol et 6 g d'éther monoéthylique d'éthylèneglycol, juste avant application de la peinture.

Le rapport pigments/liant (P/L) est de 5,7.

La résistance superficielle $R_s$ du revêtement obtenu est :

$R_s$ = 500 MΩ/carré

Le facteur d'absorption solaire $\alpha$s est égal à 0,23.

Le mode de préparation des compositions de peintures des exemples suivants se fait de façon similaire à celui décrit ci-dessus, à l'exception des modifications indiquées concernant les ingrédients employés.

EXEMPLE 3

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
-   liant silicone RTV 121 (20 g) et catalyseur 10028 (0,4 g),
-   pigment : mélange de poudres de pigment 1 de l'exemple 1 (80 g) et d'orthotitanate de zinc (40 g),
-   solvants : mélange de toluène, d'ester et d'éther de l'exemple 2.
Le rapport P/L est de 6.
La résistance superficielle du revêtement obtenu est de :

$R_s$ = 140 MΩ/carré

Le facteur d'absorption solaire $\alpha$s est égal à 0,24.

EXEMPLE 4

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante.
-   liant silicone Sylgard 184 (8,4 g) et catalyseur Sylgard® (0,84g) de DOW CORNING,
-   pigment : mélange de poudres de pigment 1 de l'exemple 1 (30 g) et d'orthotitanate de Zinc (26g),
-   solvants : mélange de toluène, d'ester et d'éther de l'exemple 2.
Le rapport P/L est de 6.
La résistance superficielle du revêtement obtenu est de :

$R_s$ = 160 MΩ/carré

Le facteur d'absorption solaire $\alpha$s est égal à 0,25.

EXEMPLE 5

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :

- liant silicone Rhodorsil 10336® (32 g) de Rhône Poulenc,
- pigment : poudre de pigment 1 de l'exemple 1 (150 g) ,
- solvants : mélange de toluène, d'ester et d'éther de l'exemple 2.
  Le rapport P/L est de 4,7.
  La résistance superficielle du revêtement obtenu est de :

$R_s$ = 15 MΩ/carré

Le facteur d'absorption solaire αs est égal à 0,22.

EXEMPLE 6

On obtient un revêtement blanc antistatique et radiotransparent dont l'épaisseur après séchage est comprise entre 25 et 40 μm, en appliquant sur un substrat non conducteur de l'électricité une peinture dont la composition est la suivante :
- liant silicone Rhodorsil® 10336 (20 g) de Rhône Poulenc,
- pigment : mélange de poudres de pigment 1 de l'exemple 1 (120 g), et d'orthotitanate de zinc (30 g),
- solvants : mélange de toluène, d'ester et d'éther de l'exemple 2.
  Le rapport P/L est de 7,5.
  La résistance superficielle du revêtement obtenu est de :

$R_s$ = 15O MΩ/carré

Le facteur d'absorption solaire αs est égal à 0,21.

EXEMPLE 7

On obtient un revêtement blanc antistatique et radiotransparent dont l'épaisseur après séchage est comprise entre 25 et 40 μm, en appliquant sur un substrat non conducteur de l'électricité une peinture dont la composition est la suivante :
- liant silicone Rhodorsil® 10336 (20 g) de Rhône Poulenc,
- pigment : mélange de poudres de pigment 7 de l'exemple 1 (100 g), et d'orthotitanate de zinc (50 g),
- solvants : mélange de toluène, d'ester et d'éther de l'exemple 2.
  Le rapport P/L est de 7,5.
  La résistance superficielle du revêtement obtenu est de :

$R_s$ = 100 MΩ/carré

Le facteur d'absorption solaire αs est égal à 0,21.

EXEMPLE 8

On obtient un revêtement blanc antistatique et radiotransparent dont l'épaisseur après séchage est comprise entre 25 et 40 μm, en appliquant sur un substrat non conducteur de l'électricité une peinture dont la composition est la suivante :
- liant silicone Rhodorsil® 10336 (20 g) de Rhône Poulenc,
- pigment : mélange de poudres de pigment 4 de l'exemple 1 (95 g), et d'orthotitanate de zinc (55 g),
- solvants : mélange de toluène, d'ester et d'éther de l'exemple 2.
  Le rapport P/L est de 7,5.
  La résistance superficielle du revêtement obtenu est de :

$R_s$ = 150 MΩ/carré

Le facteur d'absorption solaire αs est égal à 0,23.

EP 0 487 366 B1

EXEMPLE 9

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
- liant silicone Rhodorsil® 10336 (15 g) de Rhône Poulenc,
- pigment : poudre de pigment 14 de l'exemple 1 (115 g),
- solvants : mélange de toluène, d'ester et d'éther de l'exemple 2.
  Le rapport P/L est de 7,6.
  La résistance superficielle du revêtement obtenu est de :

$R_s$ = 20 M$\Omega$/carré

Le facteur d'absorption solaire $\alpha$s est égal à 0,24.

EXEMPLE 10

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
- liant silicone Rhodorsil® 10336 (10,5 g) de Rhône Poulenc,
- pigment : poudre de pigment 17 de l'exemple 1 (80 g),
- solvants : mélange de toluène, d'ester et d'éther de l'exemple 2.
  Le rapport P/L est de 7,6.
  La résistance superficielle du revêtement obtenu est de :

$R_s$ = 100 M$\Omega$/carré

Le facteur d'absorption solaire $\alpha$s est égal à 0,25.

EXEMPLE 11

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
- liant silicone Rhodorsil® 10336 (12,5 g) de Rhône Poulenc,
- pigment : mélange de poudres de pigment 13 de l'exemple 1 (57 g), et d'orthotitanate de zinc (37 g),
- solvants : mélange de toluène, d'ester et d'éther de l'exemple 2.
  Le rapport P/L est de 7,5.
  La résistance superficielle du revêtement obtenu est de :

$R_s$ = 500 M$\Omega$/carré

Le facteur d'absorption solaire $\alpha$s est égal à 0,21.

EXEMPLE 12

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
- liant silicone Rhodorsil® 10336 (4,5 g) de Rhône Poulenc,
- pigment : poudre de pigment 19 de l'exemple 1 (35 g),
- solvants : mélange de toluène, d'ester et d'éther de l'exemple 2.
  Le rapport P/L est de 7,8.
  La résistance superficielle du revêtement obtenu est de :

$R_s$ = 250 M$\Omega$/carré

7

Le facteur d'absorption solaire αs est égal à 0,16.

EXEMPLE 13

On obtient un revêtement blanc antistatique et radiotransparent dont l'épaisseur après séchage est comprise entre 25 et 40 μm, en appliquant sur un substrat non conducteur de l'électricité une peinture dont la composition est la suivante :
- liant silicone Rhodorsil® 10336 (6 g) de Rhône Poulenc,
- pigment : mélange de poudres de pigment 23 de l'exemple 1 (45 g), et d'orthotitanate de zinc (55 g),
- solvants : mélange de toluène, d'ester et d'éther de l'exemple 2.
Le rapport P/L est de 7,5.
La résistance superficielle du revêtement obtenu est de :

$R_s$ = 6 MΩ/carré

Le facteur d'absorption solaire αs est égal à 0,20.

EXEMPLE 14

On obtient un revêtement blanc antistatique et radiotransparent dont l'épaisseur après séchage est comprise entre 25 et 40 μm, en appliquant sur un substrat non conducteur de l'électricité une peinture dont la composition est la suivante :
- liant silicone Rhodorsil® 10336 (12 g) de Rhône Poulenc,
- pigment : mélange de poudres de pigment 12 de l'exemple 1 (90 g), et d'orthotitanate de zinc (55 g),
- solvants : mélange de toluène, d'ester et d'éther de l'exemple 2.
Le rapport P/L est de 7,5.
La résistance superficielle du revêtement obtenu est de :

$R_s$ = 2 MΩ/carré

Le facteur d'absorption solaire αs est égal à 0,19.

EXEMPLE 15

On obtient un revêtement blanc antistatique et radiotransparent dont l'épaisseur après séchage est comprise entre 25 et 40 μm, en appliquant sur un substrat non conducteur de l'électricité une peinture dont la composition est la suivante :
- liant silicone Rhodorsil® 10336 (10 g) de Rhône Poulenc,
- pigment : mélange de poudres de pigment 12 de l'exemple 1 (55 g), et d'orthotitanate de zinc (20 g),
- solvants : mélange de toluène, d'ester et d'éther de l'exemple 2.
Le rapport P/L est de 7,5.
La résistance superficielle du revêtement obtenu est de :

$R_s$ = 70 MΩ/carré

Le facteur d'absorption solaire αs est égal à 0,20.

EXEMPLE 16

On obtient un revêtement blanc antistatique et radiotransparent dont l'épaisseur après séchage est comprise entre 25 et 40 μm, en appliquant sur un substrat non conducteur de l'électricité une peinture dont la composition est la suivante :
- liant silicone Rhodorsil® 10336 (10 g) de Rhône Poulenc,
- pigment : poudre de pigment 19 de l'exemple 1 (60 g),
Le rapport P/L est de 6.
La résistance superficielle du revêtement obtenu est de :

$R_s$ = 50 MΩ/carré

Le facteur d'absorption solaire αs est égal à 0,22.

<u>EXEMPLE 17</u>

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
- liant silicone résine K (10 g) de Wacker,
- pigment : mélange de poudres de pigment 12 de l'exemple 1 (51 g), et d'orthotitanate de zinc (25 g),
- solvants : mélange de toluène, d'ester et d'éther de l'exemple 2.
Le rapport P/L est de 7,5.
La résistance superficielle du revêtement obtenu est de :

$R_s$ = 15 MΩ/carré

Le facteur d'absorption solaire αs est égal à 0,21.

<u>EXEMPLE 18</u>

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
- liant silicone résine K (10 g) de Wacker,
- pigment : poudre de pigment 31 de l'exemple 1 (75 g),
- solvants : mélange de toluène, d'ester et d'éther de l'exemple 2.
Le rapport P/L est de 7,5.
La résistance superficielle du revêtement obtenu est de :

$R_s$ = 70 MΩ/carré

Le facteur d'absorption solaire αs est égal à 0,22.

<u>EXEMPLE 19</u>

On obtient un revêtement blanc antistatique et radiotransparent dont l'épaisseur après séchage est comprise entre 25 et 40 $\mu$m, en appliquant sur un substrat non conducteur de l'électricité une peinture dont la composition est la suivante :
- liant silicone Rhodorsil® 10336 (10 g) de Rhône Poulenc,
- pigment : mélange de poudres de pigment 12 de l'exemple 1 (55 g), et de dioxyde de titane (20 g),
- solvants : mélange de toluène, d'ester et d'éther de l'exemple 2.
Le rapport P/L est de 7,5.
La résistance superficielle du revêtement obtenu est de :

$R_s$ = 140 MΩ/carré

Le facteur d'absorption solaire $\alpha_s$ est égal à 0,23.

**Revendications**

1. Une peinture blanche comprenant un pigment blanc semi-conducteur, un liant filmogène, un solvant de ce liant, et, facultativement, un pigment blanc non semi-conducteur, caractérisée en ce que le pigment blanc semi-conducteur présente une résistance électrique volumique d'au plus 2,5 k$\Omega$/cm$^3$ et est le produit obtenu (a) par calcination à une température de 700 à 1000°C d'un mélange intime de 30 à 73 parties en poids d'oxyde d'étain $SnO_2$, de 70 à 27 parties de dioxyde de titane, et de 0,10 à 10 parties en poids d'oxyde d'antimoine $Sb_2O_3$, le total de l'oxyde d'étain et du dioxyde de titane étant de 100 parties, puis (b) broyage du produit résultant de l'étape (a) en particules de grosseur pigmentaire ; et en ce que ladite peinture est radiotransparente et présente un facteur d'absorption solaire $\alpha_s$ inférieur

ou égal à 0,30 et une résistance électrique superficielle $R_s$ compriseentre 1 et 1000 MΩ/carré.

2. Une peinture selon la revendication 1, caractérisée en ce que la proportion de $Sb_2O_3$ est de 0,25 à 5 parties en poids par 100 parties en poids de $SnO_2$ + $TiO_2$.

3. Une peinture selon la revendication 1 ou 2, caractérisée en ce que le dioxyde de titane est sous forme d'anatase ou d'un mélange d'anatase ou de rutile.

4. Une peinture selon l'une quelconque des revendications 1 à 3, caractérisée en ce qu'un pigment blanc non conducteur de l'électricité est présent, ce pigment étant choisi parmi le dioxyde de titane, l'oxyde de zinc, l'orthotitanate de zinc, l'orthostannate de zinc et l'orthotitanate d'étain.

5. Une peinture selon la revendication 4, caractérisée en ce que le rapport en poids pigment non conducteur de l'électricité/pigment semi-conducteur n'excède pas 1,5.

6. Une peinture selon l'une quelconque des revendications 1 à 5, caractérisée en ce que le rapport en poids pigments totaux/liant est compris entre 1,5 et 10 inclusivement.

7. Substrat caractérisé en ce qu'il porte un revêtement appliqué à partir d'une composition de peinture telle que définie à l'une quelconque des revendications 1 à 6.

8. Substrat selon la revendication 7, caractérisé en ce qu'il est une antenne de satellite spatial.

**Claims**

1. A white paint comprising a white semiconducting pigment, a film forming binder, a solvent for this binder, and optionally, a non semiconducting white pigment, characterized in that the semiconducting white pigment has a volume electrical resistivity of at most 2.5 kΩ/$cm^3$ and is the product obtained (a) by calcining at a temperature of 700 to 1000 °C an intimate mixture of 30 to 73 parts by weight of tin oxide $SnO_2$, 70 to 27 parts of titanium dioxide, and 0.10 to 10 parts by weight of antimony oxide $Sb_2O_3$, the total of tin oxide and titanium dioxide being 100 parts, and then (b) grinding the product resulting from stage (a) into pigment sized particles; and in that the said paint is radiotransparent and has a solar absorption factor $α_s$ less than or equal to 0.30 and a surface electrical resistance $R_s$ of between 1 and 1000 MΩ/unit square.

2. A paint according to Claim 1, characterized in that the proportion of $Sb_2O_3$ is 0.25 to 5 parts by weight per 100 parts by weight of $SnO_2$ + $TiO_2$.

3. A paint according to Claim 1 or 2 characterized in that the titanium dioxide is in the form of anatase or a mixture of anatase or rutile.

4. A paint according to any one of Claims 1 to 3, characterized in that a white pigment is present which is a non conductor of electricity, this pigment being selected from titanium dioxide, zinc oxide, zinc orthotitanate, zinc orthostannate and tin orthotitanate.

5. A paint according to Claim 4, characterized in that the ratio by weight of the pigment which is a non-conductor of electricity/semiconducting pigment does not exceed 1.5

6. A paint according to any one of Claims 1 to 5, characterized in that the ratio by weight of total pigments/binder is between 1.5 and 10 inclusively.

7. Substrate characterized in that it carries a coating applied from a paint composition such as defined in any one of Claims 1 to 6.

8. Substrate according to Claim 7, characterized in that it is a space satellite aerial.

**Patentansprüche**

1. Weißes Anstrichmittel, bestehend aus einem halbleitenden weißen Pigment, einem filmbildenden Bindemittel, einem Lösungsmittel für dieses Bindemittel und wahlweise einem nicht halbleitenden weißen Pigment, dadurch gekennzeichnet, daß das halbleitende weiße Pigment einen elektrischen Bahnwiderstand von höchstens 2,5 k$\Omega$/cm$^3$ besitzt und das Produkt ist, das man erhält (a) durch Brennen bei einer Temperatur von 700 bis 1000 °C einer innigen Mischung aus 30 bis 73 Gewichtsteilen Zinnoxid SnO$_2$, 70 bis 27 Gewichtsteilen Titandioxid und 0,10 bis 10 Gewichtsteilen Antimonoxid Sb$_2$O$_3$, wobei die Gesamtmenge des Zinnoxids und des Titandioxids 100 Teile beträgt, und dann (b) durch Zerkleinern des sich aus dem Schritt (a) ergebenden Produkts zu Teilchen von Pigmentgröße, und daß dieses Anstrichmittel funkdurchlässig ist und einen Solarabsorptionsfaktor $\alpha_s$ weniger als oder gleich 0,30 und einen elektrischen Oberflächenwiderstand R$_s$ von 1 bis 1000 M$\Omega$/Quadrat besitzt.

2. Anstrichmittel nach Anspruch 1, dadurch gekennzeichnet, daß der Anteil an Sb$_2$O$_3$ 0,25 bis 5 Gewichtsteile auf 100 Gewichtsteilen SnO$_2$ + TiO$_2$ beträgt.

3. Anstrichmittel nach Anspruch 1 oder 2, dadurch gekennzeichnet, daß das Titandioxid in Form von Anatas oder einer Mischung von Anatas und Rutil vorliegt.

4. Anstrichmittel nach einem der Ansprüche 1 bis 3, dadurch gekennzeichnet, daß ein elektrisch nicht leitendes weißes Pigment vorhanden ist, das ausgewählt ist aus Titandioxid, Zinkoxid, Zinkorthotitanat, Zinkorthostannat und Zinnorthotitanat.

5. Anstrichmittel nach Anspruch 4, dadurch gekennzeichnet, daß das Gewichtsverhältnis von elektrisch nichtleitendem Pigment zu halbleitendem Pigment 1,5 nicht überschreitet

6. Anstrichmittel nach einem der Ansoprüche 1 bis 51 dadurch gekennzeichnet, daß das Gewichtsverhältnis von Gesamtpigmenten zu Bindemittel 1,5 bis einschließlich 10 beträgt.

7. Substrat, dadurch gekennzeichnet, daß es eine Beschichtung trägt, die ausgehend von einer Anstrichmittelzusammensetzung nach einem der Ansprüche 1 bis 6 aufgetragen ist.

8. Substrat nach Anspruch 7, dadurch gekennzeichnet, daß es eine Raumsatellitenantenne ist.